(19) Europäisches Patentamt
European Patent Office
Office européen des brevets

(11) Veröffentlichungsnummer: **0 150 386**
**B1**

(12) # EUROPÄISCHE PATENTSCHRIFT

(45) Veröffentlichungstag der Patentschrift: **02.12.87**

(51) Int. Cl.⁴: **C 11 D 3/00**, C 11 D 3/18, B 01 D 19/04

(21) Anmeldenummer: **84115263.0**

(22) Anmeldetag: **12.12.84**

(54) **Zur Verwendung in tensidhaltigen Mitteln geeignetes Schaumregulierungsmittel.**

(30) Priorität: **02.01.84 DE 3400008**

(43) Veröffentlichungstag der Anmeldung: **07.08.85 Patentblatt 85/32**

(45) Bekanntmachung des Hinweises auf die Patenterteilung: **02.12.87 Patentblatt 87/49**

(84) Benannte Vertragsstaaten: **AT BE CH DE FR GB IT LI NL**

(56) Entgegenhaltungen:
**EP-A- 0 008 829**
**EP-A- 0 063 346**
**DE-A- 3 242 202**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Wuhrmann, Juan Carlos, Dr.**
**Curieweg 8**
**D-4000 Düsseldorf (DE)**
Erfinder: **Seiter, Wolfgang, Dr.**
**Lorbeerweg 7**
**D-4040 Neuss (DE)**
Erfinder: **Giesen, Brigitte**
**Düsselkämpchen**
**D-4000 Düsseldorf (DE)**
Erfinder: **Schmadel, Edmund, Dr.**
**Hüscheirath 9**
**D-5653 Leichlingen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Paraffinkohlenwasserstoffe sind bereits wiederholt als Schaumregulierungsmittel für Wasch- und Reinigungsmittel vorgeschlagen worden. Gemäß DE-A-14 67 699 werden die Kohlenwasserstoffe in wäßrigen, seifenhaltigen Waschmittelslurries dispergiert und anschließend sprühgetrocknet. Bei dieser Verarbeitungsweise geht jedoch ein wesentlicher Teil der schauminhibierenden Wirkung verlören. Zum Ausgleich müssen daher vergleichsweise hohe Paraffinmengen eingesetzt werden, was zu einer Beeinträchtigung der Waschkraft führt. In DE-C-14 67 614 wird daher vorgeschlagen, die Paraffine dem Waschpulver nach der Sprühtrocknung zuzusetzen, so daß sie mit den Waschmittelpartikeln Agglomerate bilden. Die schaumdämpfende Wirkung ist aber auch in diesem Falle an die Anwesenheit von Seife gebunden, was die Rezepturmöglichkeiten auf seifenhaltige Gemische einengt.

In DE-A-25 00 411 sind schaumregulierte Waschmittel beschrieben, die 0,02 bis 8 % eines Wachses oder Wachsgemisches mit einem Schmelzbereich von 35 bis 125 °C enthalten. Die vorzugsweise aus mikrokristallinen Wachsen bestehende Wachskomponente soll in innigem Gemisch mit der Tensidkomponente des Waschmittels vorliegen. Es läßt sich zeigen, daß derartige Zubereitungen gegenüber anionischen Tensiden nahezu wirkungslos sind. Zusätzlich können den beschriebenen Mitteln, wie in DE-A-25 09 508 offenbart, noch bekannte Silikonentschäumer zugesetzt werden. Teilchenförmige Entschäumerzubereitungen, enthaltend 0,25 bis 35 % Wachs, insbesondere Mikrokristallinwachs, 65 bis 99,75 % an nichtionischen Tensiden und an — als fakultativen Bestandteil — Silikonen bzw. silanierter Kieselsäure, sind Gegenstand der DE-A-26 50 365. Auch für diese Gemische gilt, daß ihre schaumdämpfende Wirkung im Wesentlichen auf nichtionische Waschmittel beschränkt ist. Den gleichen Nachteil besitzen die Waschmittel gemäß EP-A-88 29, die einen Gehalt von 3 bis 30 % an überwiegend nichtionischen Tensiden, 10 bis 96,9 % Buildersalzen und 1 bis 5 % eines Entschäumers enthalten. Dieser Entschäumer besteht aus einer homogenen Dispersion von nichtionischen Tensiden, silanierter Kieselsäure sowie Paraffin- oder Mikrokristallinwachsen vom Schmelzpunkt 35 bis 110 °C und wird auf die vorgeformten Waschmittelpartikel aufgemischt.

In EP-A-45 208 sind Entschäumergranulate beschrieben, die durch Aufsprühen eines bekannten schmelzbaren Entschäumers, vorzugsweise eines Paraffinwachses, auf ein körniges Basismaterial erhalten werden. Die Temperatur der Basiskörner soll hierbei wenigstens 15 % unter der Entstarrungstemperatur des Entschäumers liegen. Die Granulate werden bevorzugt in Wasch- und Reinigungsmittel eingesetzt. Es läßt sich zeigen, daß komplex zusammengesetzte Entschäumergemische bei dieser Arbeitsweise zu unreproduzierbaren Ergebnissen führen.

Von besonderem Interesse in bezug auf die vorliegende Erfindung ist die DE-A-28 57 155 (EP-A-216), in der eine Detergenskomposition mit einem Gehalt an 0,01 bis 5 % eines Schauminhibitors beschrieben sind. Dieser Inhibitor besteht zu 99,9 bis 75 % aus einem Gemisch eines bei Raumtemperatur flüssigen Kohlenwasserstoffes mit einem festen, d. h. bei 35° bis 110 °C schmelzenden Kohlenwasserstoff oder Wachsester und zu 0,1 bis 25 % aus einer hydrophobierten (silanierten) Kieselsäure. Das Mischungsverhältnis von flüssigem zu festem Kohlenwasserstoff soll 30 : 70 bis 98 : 2 betragen. Die zu entschäumende Detergenskomponente kann aus anionischen und/oder nichtionischen Tensiden bestehen. Bei Anwesenheit anionischer Detergentien in Anteilen von 5 bis 15 Gew.-% sind für eine ausreichende Schaumdämpfung zwischen 0,5 und 2,1 % an Entschäumer erforderlich, was im Hinblick darauf, daß Paraffinkohlenwasserstoffe bzw. Wachse, ähnlich einer Fettanschmutzung die Reinigungswirkung eines Waschmittels belasten, als nachteilig anzunehmen ist.

Aus EP-A-63 346 sind zum Einsatz in Waschmitteln geeignete Entschäumer bekannt, die durch mehrstündiges Erhitzen eines Gemisches aus verzweigten 16 bis 30 C-Atome aufweisenden Alkoholen und kolloidaler Kieselsäure, Zufügen einer Wachskomponente und Adsorbieren an einem wasserlöslichen Träger hergestellt werden.

Es bestand die Aufgabe, ein Schaumregulierungsmittel zu entwickeln, das die Nachteile der vorbekannten Mittel vermeidet und insbesondere in anionaktiven Tensidlösungen die bekannten Mittel wirkungsmäßig übertrifft.

Gegenstand der Erfindung, mit der diese Aufgabe gelöst wird, ist ein zur Verwendung in tensidhaltigen Mitteln geeignetes Schaumregulierungsmittel, bestehend aus einem Gemisch von Paraffinkohlenwasserstoffen und hydrophobierter Kieselsäure, das ggf. an einem wasserlöslichen Trägermaterial adsorbiert ist, gekennzeichnet durch die folgende Zusammensetzung :

a) 5 bis 60 Gew.-% mikrokristallines Paraffinwachs mit einem Erstarrungspunkt von 60° bis 95 °C,
b) 15 bis 60 Gew.-% Hartparaffin mit einem Erstarrungspunkt von 40° bis 60 °C,
c) 1 bis 50 Gew.-% Weichparaffin mit einem Erstarrungspunkt von 32° bis 42 °C,
d) 3 bis 18 Gew.-% hydrophobierte, feinteilige Kieselsäure,

wobei das Schaumregulierungsmittel frei von Tensiden ist.

Paraffinwachse der verwendeten Art stellen im allgemeinen komplexe Stoffgemische ohne scharfen Schmelzpunkt dar. Zu ihrer Charakterisierung wird daher der Erstarrungspunkt (E. P.) gemessen. Darunter versteht man den Temperaturbereich, in dem das Wachs durch langsames Abkühlen aus dem

flüssigen in den festen Zustand übergeht.

Als Komponente (a) kommen bekannte midrokristaline Paraffinwachse in Frage, die einen Erstarrungspunkt von 60° bis 95 °C, vorzugsweise von 62° bis 90 °C aufweisen. Derartige mikrokristaline Wachse sind z. B. Bestandteil von Montanwachsen bzw. hochschmelzenden Erdölfraktionen (Ceresin) und zeichnen sich durch einen Gehalt an verzweigten und cyclischen Paraffinen aus. Ihr Anteil an den Schaumregulierungsmitteln beträgt vorzugsweise 20 bis 55 Gew.-% und insbesondere 30 bis 50 Gew.-%.

Als Komponente (b) eignen sich übliche Paraffinkohlenwasserstoffe, die im Gegensatz zu den vorgenannten mikrokristallinen Wachsen ein mehr oder weniger ausgeprägtes Kristallisationsverhalten zeigen. Der Erstarrungspunkt dieser allgemein als Hartparaffine bezeichneten Kohlenwasserstoffe liegt zwischen 40° und 60 °C, vorzugsweise zwischen 42° und 56 °C. Bezogen auf Schaumregulierungsmittel beträgt ihr Anteil 15 bis 60 Gew.-%, vorzugsweise 20 bis 50 Gew.-% und insbesondere 25 bis 45 Gew.-%.

Die Gesamtmenge der Komponenten (a) und (b) soll in solchen Gemischen, die keine weiteren schauminhibierend wirkenden Stoffe enthalten, mindestens 50 Gew.-%, vorzugsweise 65 bis 85 Gew.-% betragen.

Die unter (c) aufgeführte Komponente ist mit 1 bis 50 Gew.-%, vorzugsweise mit 5 bis 25 Gew.-% anwesend und besteht im wesentlichen aus Weichparaffin mit einem Erstarrungspunkt von 32° bis 42 °C, vorzugsweise einem solchen von 35° bis 40 °C. Derartige Paraffinfraktionen sind zum Beispiel unter der Bezeichnung Vaseline im Handel.

Die Komponente (d) besteht aus feinteiliger, hydrophobierter Kieselsäure und ist in Anteilen von 3 bis 18 Gew.-%, vorzugsweise von 5 bis 15 Gew.-% in dem Gemisch enthalten. Unter hydrophobierter, feinteiliger Kieselsäure versteht man durch Behandeln von mikrofeiner, durch Fällung aus Silikatlösungen oder pyrogene Zersetzung von Siliciumtetrachlorid hergestellte Kieselsäure, die in bekannter Weise mit Organochlorsilanen umgesetzt wurde, so wie dies zum Beispiel in US-A-3 207 698 und US-A-3 388 073 beschrieben ist. Als Beispiel sei ein mit Dimethyldichlorsilan oder Trimethylchlorsilan umgesetztes, pyrogenes Siliciumdioxid genannt, das üblicherweise eine Teilchengröße von 5 bis 30 nm aufweist. Weiterhin kommt hydrophobierte Kieselsäure in Frage, die durch Fixieren von Organopolysiloxanen, zum Beispiel Polydimethylsiloxan, auf Siliciumdioxid der angegebenen Teilchengröße erhältlich sind. Derartige Produkte sind zum Beispiel aus US-A-3 235 509 bekannt.

Ein wesentliches Merkmal des Schaumregulierungsmittels besteht in der Abwesenheit von Tensiden im Stoffgemisch. Unter Tensiden sind oberflächenaktive Verbindungen mit hydrophobem Molekülteil und hydrophilen anionischen, ampholytischen, zwitterionischen, kationischen und nichtionischen Gruppen zu verstehen, die in wäßriger Lösung oder Dispersion eine reinigende bzw. emulgierende Wirkung entfalten. Der hydrophobe Molekülteil besteht im allgemeinen aus einem Kohlenwasserstoffrest bzw. einem substituierten Kohlenwasserstoffrest oder einem in Wasser schwer löslichen Polyglykoletherrest, zum Beispiel einem Polypropylenglykol- bzw. Polybutylenglykol-Etherrest. Verbindungen mit nichtpolarem Molekülaufbau, insbesondere wasserlösliche bzw. in Wasser dispergierbare Polymere, die unter bestimmten Voraussetzungen in Wasser ebenfalls eine Dispergierwirkung entfalten können, wie Carboxymethylcellulose, Polyethylenglykol, Polyvinylalkohol, Polyvinylpyrrolidon und Polyacrylate, fallen nicht unter die Definition « Tenside » und können in den erfindungsgemäßen Mitteln enthalten sein.

Zur Herstellung des Schaumregulierungsmittels werden die Wachskomponenten aufgeschmolzen und miteinander vermischt. Die hydrophobierte Kieselsäure wird in diesem Gemisch dispergiert. Man kann auch so vorgehen, daß die hydrophobierte Kieselsäure zunächst in einer der Mischungskomponenten dispergiert und anschließend mit den übrigen Komponenten vermischt wird. Nach vollständigem Vermischen der Einzelbestandteile wird das Gemisch durch Abkühlen verfestigt und zweckmäßigerweise in rieselfähige Partikel überführt. Dies kann durch mechanisches Zerkleinern, beispielsweise durch Vermahlen oder Extrudieren und anschließendes Zerhacken der extrudierten Stränge, durch Abkühlen auf einer Schuppenwalze oder durch Pressen und Pelletieren sowie durch Sprühkühlen, d. h. durch Versprühen in einen kühlenden Gasstrom erfolgen. Sofern das Schaumregulierungsmittel einem pulverförmigen Waschmittel zugesetzt werden soll, empfiehlt es sich, die Partikelgröße so zu wählen, daß sie in der Größenordnung der Partikelgröße des Waschpulvers liegt, um Entmischungsvorgängen vorzubeugen. Geeignete Produkte weisen für diese Zwecke eine Korngröße von 0,1 bis 1,5 mm, vorzugsweise von 0,2 bis 1 mm auf.

Das aus den Wachskomponenten und hydrophobierter Kieselsäure bestehende Schaumregulierungsmittel kann in einer bevorzugten Ausführungsform auch im gemisch mit verzweigtkettigen Alkoholen der Formel (I) vorliegen

$$R^1 - CH_2 - CH_2 - \underset{\displaystyle R^2}{\underset{|}{CH}} - CH_2 - OH \qquad (I)$$

in der die Gruppen $R^1$ und $R^2$ gleich oder verschieden sein können und Alkylreste mit 4 bis 16 Kohlenstoffatomen bedeuten und die Gesamtzahl der in dem Alkohol enthaltenen Kohlenstoffatome 16 bis 30 beträgt. Das Mischungsverhältnis des aus den Komponenten a + b + c + d bestehenden Schaumregulierungsmittels mit dem Alkohol der Formel I kann 1 : 50 bis 1 : 1, vorzugsweise 1 : 25 bis

1 : 2 betragen. Als geeignete Alkohole haben sich insbesondere Guerbetalkohole erwiesen, die in bekannter Weise aus geradkettigen, gesättigten Alkoholen mit 6 bis 16 C-Atomen zugänglich sind, beispielsweise durch Erhitzen in Gegenwart von starkem Alkali. Die Verwendung dieser Alkohole im Gemisch mit silanierter Kieselsäure als Schauminhibitor ist z. B. aus DE-A-30 13 391 bekannt. Durch Zusatz dieser Alkohole zu dem aus Paraffingemisch und silanierter Kieselsäure bestehenden Schaumregulierungsmittel kann deren Wirkung noch gesteigert bzw. die Verarbeitbarkeit verbessert werden.

In Gemischen, die Alkohole der Formel I enthalten, kann der Anteil der Komponente (c) höher liegen, als in alkoholfreien Gemischen. So lassen sich mit Vorteil Gemische verwenden, die aus 2 bis 20 Gewichtsteilen einer Mischung von

20 bis 45 Gew.-% Komponente (a)
15 bis 40 Gew.-% Komponente (b)
20 bis 50 Gew.-% Komponente (c)
5 bis 15 Gew.-% Komponente (d)

und 98 bis 80 Gewichtsteilen Alkohol der Formel I bestehen.

Im Folgenden wird die Bezeichnung « Schaumregulierungsmittel » sowohl für die aus den Komponenten a + b + c + d bestehenden Kompositionen als auch für deren Gemische mit Alkoholen der Formel I verwendet.

In einer bevorzugten Ausführungsform ist das Schaumregulierungsmittel an einer wasserlöslichen Trägersubstanz adsorbiert. Als Trägersubstanz kommen in erster Linie wasserlösliche anorganische Salze, wie Natriumsulfat, Natriumchlorid, Natriumcarbonat, Natriumsilikat, Natriumborat, Natriumphosphat und Natriumpolyphosphate, wie zum Beispiel Natriumtripolyphosphat, ferner Gemische der genannten Salze in Frage. Anstelle der Natriumsalze können auch die Kaliumsalze verwendet werden. Vorzugsweise verwendet man Gemische aus Natriumsulfat und Natriumsilikat der Zusammensetzung $Na_2O : SiO_2 = 1 : 2$ bis $1 : 3{,}5$, aus Natriumtripolyphosphat und Natriumsilikat der angegebenen Zusammensetzung und insbesondere ein ternäres Gemisch aus Natriumsulfat, Natriumtripolyphosphat und Natriumsilikat der angegebenen Zusammensetzung.

In den binären Gemischen beträgt der Anteil des Natriumsilikats 5 bis 25 Gew.-% und der des Natriumtripolyphosphats oder Natriumsulfats 95 bis 75 Gew.-%, jeweils bezogen auf wasserfreie Salze. Der Wassergehalt dieser Gemische in Form von Hydratwasser und geringer Feuchtigkeitsspuren liegt üblicherweise bei 5 bis 20 Gew.-%. In ternären Gemischen beträgt der Anteil des Natriumsilikats ebenfalls 5 bis 25 Gew.-%, der des Natriumsulfats 20 bis 50 Gew.-% und der des Tripolyphosphats 10 bis 50 Gew.-%. Besonders bewährt haben sich ternäre Gemische aus 5 bis 15 Gew.-% Natriumsilikat der Zusammensetzung $Na_2O : SiO_2 = 1 : 3$ bis $1 : 3{,}5$, 30 bis 50 Gew.-% Natriumsulfat, 25 bis 45 Gew.-% Natriumtripolyphosphat und 7 bis 18 Gew.-% Wasser. die Herstellung eines derartigen körnigen Trägermaterials erfolgt zweckmäßigerweise durch Sprühtrocknen eines wäßrigen Ansatzes (Slurry) der betreffenden Salze mittels heißer, im Gleichstrom oder Gegenstrom geführter Gase. Die Temperatur der zugeführten Trockengase beträgt im allgemeinen 200 bis 450 °C, die der abgeführten Gase 75 bis 100 °C. Das sprühgetrocknete Trägergranulat wird durch Sieben bzw. Windsichten von staubförmigen und grobkörnigen Anteilen befreit und weist eine Korngröße von 0,1 bis 1,6 mm sowie ein Schüttgewicht von 500 bis 700 g/l auf.

Das Trägergranulat wird anschließend mit dem geschmolzenen Schaumregulierungsmittel vermischt, was vorzugsweise durch Aufsprühen der Schmelze auf das mechanisch bzw. pneumatisch bewegte Trägermaterial erfolgt. Es hat sich als vorteilhaft erwiesen, das noch warme, d. h. den Sprühturm verlassende Trägerkorn in dieser Weise zu behandeln bzw. ein auf Raumtemperatur abgekühltes Korn zuvor zu erwärmen, beispielsweise mittels warmer, strömender Luft. Man erreicht auf diese Weise eine besonders gleichmäßige Verteilung des Schaumregulierungsmittels und gute Reproduzierbarkeit der Ergebnisse. Zweckmäßigerweise weist das Trägerkorn während des Zumischens eine Temperatur auf, die in der Größenordnung des Erstarrungspunktes des Kohlenwasserstoffgemisches plus/minus 20 °C, vorzugsweise plus/minus 10 °C liegt.

Brauchbare Granulate lassen sich auch in der Weise herstellen, daß man die schauminhibierende Komponente und das Trägersalz bei einer Temperatur, die im Schmelzbereich des Paraffingemisches oder darüber liegt, in einer Mischvorrichtung miteinander verknetet und während der nachfolgenden Abkühlungsperiode durch geeignete Zerhackerorgane in Partikel mit der gewünschten Größe zerkleinert. Mit Vorteil lassen sich auf diese Weise Granulate verarbeiten, die mehr als 5 Gew.-% an Paraffingemisch enthalten.

Eine weitere, besonders bevorzugte Arbeitsweise zur Herstellung eines aus Schaumregulierungsmittel und Trägerkorn bestehenden, schüttfähigen Granulates ist dadurch gekennzeichnet, daß man ein Trägersalz oder Trägersalzgemische, vorzugsweise das vorstehend beschriebene Gemisch aus Natriumsilikat, Natriumsulfat und Natriumtripolyphosphat, zusammen mit dem geschmolzenen Schaumregulierungsmittel in Wasser löst bzw. dispergiert und in der oben angegebenen Weise sprühtrocknet. Da die salzhaltige wäßrige Lösung und die paraffinhaltige Schmelze nicht miteinander mischbar sind, ist es notwendig, einen derartigen wäßrigen Ansatz ständig, d. h. bis unmittelbar vor dem Versprühen, intensiv zu durchmischen, um eine möglichst homogene und feindisperse Verteilung des Schaumregulierungsmittels in der Salzlösung zu bewirken. Dies kann zum Beispiel durch ständiges intensives Umpumpen des wäßrigen Ansatzes über Kreislaufsysteme erfolgen. Die angestrebte Homogenisierung und feindisperse Verteilung des Schaumregulierungsmittels läßt sich erheblich verbessern, wenn man dem Gemisch wasserlösliche Polymere insbesondere Celluloseether, wie Carboxymethylcellulose, Hydroxyalkylcellulose, Methylcellulose, Cellulosemischether oder Gemische der genannten Polymeren hinzufügt, beispielsweise in Anteilen von 0,3 bis 3 Gew.-%, bezogen auf wasserfreie Bestandteile. Die Zugabe tensidartiger Dispergiermittel (entsprechend vorstehender Definition) ist weniger empfehlenswert bzw. sollte nach Möglichkeit unterbleiben, da hier durch die Wirksamkeit des Schaumregulierungsmittels erheblich beeinträchtigt wird.

Die dem vorgefertigten Trägerkorn bzw. dem für die Sprühtrocknung vorgesehenen wäßrigen Ansatz zuzusetzenden Mengen an Schaumregulierungsmittel sollen so bemessen sein, daß ein nichtklebendes bzw. nichtfettendes Granulat mit ausreichend guter Schütt- und Rieselfähigkeit entsteht. Je nach Zusammensetzung der Trägersubstanz, insbesondere ihrer Porösität bzw. Saugfähigkeit, lassen sich bis zu 25 Gew.-%, in den meisten Fällen zwischen 2 und 20 Gew.-% (bezogen auf das fertige Granulat) auf das Trägermaterial aufbringen. Als besonders zweckmäßig im Sinne einer leichten Verarbeitbarkeit der Gemische und einer guten Handhabbarkeit des festen Granulates haben sich Anteile von 4 bis 15 Gew.-% an Schaumregulierungskomponenten und 96 bis 85 Gew.-% an wasserlöslichem Trägermaterial bewährt. Sofern das Trägermaterial zusätzlich die vorgenannten wasserlöslichen Polymeren enthält, welche die Verteilbarkeit der geschmolzenen Paraffine in dem zur Sprühtrocknung vorgesehenen wäßrigen Ansatz verbessern sollen, kann deren Anteil 0,1 bis 5 Gew.-%, vorzugsweise 0,5 bis 3 Gew.-% betragen.

Zwar können auch weniger als 4 Gew.-% an Schaumregulierungsmittel in dem Granulat vorhanden sein, ohne daß dadurch die Schauminhibierung nachläßt; andererseits müssen jedoch in diesen Fällen relativ große Salzmengen verarbeitet und den Waschmitteln zugesetzt werden. Eine solche Arbeitsweise ist daher weniger bevorzugt. Ferner ist es möglich, die Lagerbeständigkeit des Schaumregulierungsmittels noch zusätzlich zu steigern bzw. die Rieselfähigkeit der Granulate dadurch zu verbessern, daß man diese pudert, d. h. mit einer feinen Schicht von in Wasser löslichen bzw. dispergierbaren Materialien beschichtet. Geeignete Beschichtungsmaterialien sind zum Beispiel die als Trägermaterial verwendeten Salze bzw. Salzgemische, ferner Adsorptionsmittel, wie feindisperses Siliciumdioxid (Aerosil®) oder pulverförmige organische Polymere bzw. Celluloseether, wie Methyl- oder Carboxymethylcellulose. Im allgemeinen ist eine solche Nachbehandlung jedoch nicht notwendig, da die erfindungsgemäßen Entschäumergranulate bereits eine sehr hohe Lagerbeständigkeit bzw. ein einwandfreies Rieselvermögen besitzen.

Ebenso sind weitere Zusätze in geringeren Mengen möglich, die jedoch die vorteilhaften Eigenschaften der Schaumregulierungsmittel nicht beeinträchtigen dürfen. Hierzu zählen zum Beispiel optische Aufheller sowie Farbstoffe bzw. Pigmente. Der Anteil dieser Zusätze soll im allgemeinen nicht mehr als 1 Gew.-% des fertigen Granulates betragen.

Die Schaumregulierungsmittel sowie ihre Gemische mit Trägersubstanzen sind zum Einsatz auf zahlreichen Anwendungsgebieten geeignet, in denen eine durch Tenside bewirkte Schaumentwicklung ganz oder teilweise unterdrückt werden. Insbesondere eignen sie sich jedoch zum Einsatz in pulverförmigen bis körnigen Wasch- und Reinigungsmitteln. Ein weiterer Gegenstand der Erfindung ist daher die Verwendung der Mittel bzw. ihrer Gemische mit Trägermaterial in derartigen Produkten. Je nach Zusammensetzung dieser Produkte genügen für eine wirksame Schaumreduzierung bzw. Schaumunterdrückung bereits Mengen von 0,005 bis 0,5 Gew.-%. Auch größere Zusätze, d. h. solche bis zu 1 Gew.-% bezogen auf das Wasch- und Reinigungsmittel, sind möglich und können in Einzelfällen, wo besonders schaumaktive Substanzen in größerer Menge zugegeben sind, angezeigt sein. Im allgemeinen kommt man aber mit den oben angegebenen Mengenanteilen, insbesondere mit solchen von 0,01 bis 0,3 Gew.-% an Schaumregulierungsmittel aus. Dementsprechend werden die Trägermaterial enthaltenden Granulate in solcher Menge eingesetzt, daß der Anteil an Schaumregulierungsmittel dem vorstehend angegebenen Bereich entspricht. Je nach Gehalt des Granulats an Schaumregulierungsmittel sind hierfür 1 bis 10 Gew.-%, vorzugsweise 2 bis 6 Gew.-% an Granulat erforderlich.

Die Wasch- und Reinigungsmittel, in denen die erfindungsgemäßen Mittel bevorzugt eingesetzt werden, können beliebiger Zusammensetzungen sein und übliche anionische, zwitterionische, ampholythische, nichtionische und auch kationische Tenside, wasserlösliche und wasserunlösliche Gerüstsubstanzen (Buildersalze), Waschalkalien, Bleichmittel und sonstige das Wasch- und Reinigungsvermögen verbessernde bzw. das Aussehen oder die Beschaffenheit des Behandlungsgutes beeinflussende Zusatzstoffe enthalten. Von besonderem Interesse sind dabei solche Waschmittel, in denen die Tensidkomponente zum überwiegenden Teil aus anionischen, d. h. stark schäumenden Waschaktivsubstanzen vom Sulfat- bzw. Sulfonattyp bestehen. Derartige Waschmittel enthalten üblicherweise 5 bis 30 Gew.-% an Tensiden, von denen mehr als 50 Gew.-% aus anionischen Verbindungen bestehen sollen. Der Befund, daß die erfindungsgemäßen Mittel in aniontensidischen, stark schäumenden Waschmitteln bereits in Mengen von weniger als 0,1 Gew.-% eine unerwünschte Schaumentwicklung zuverlässig unterdrücken, muß als im hohen Maße überraschend angesehen werden.

## Beispiele

Es wurden die in Tabelle 1 aufgeführten, bei Raumtemperatur festen Gemische durch Aufschmelzen

der Einzelbestandteile und Dispergieren der silanierten Kieselsäure hergestellt (EP = Erstarrungspunkt). Die Schmelze wurde in einem Strom kalter Luft zu Partikeln mit einem Durchmesser von 0,2 bis 1 mm versprüht.

Tabelle 1

| Mischungsbestandteil (Gew.-%) | A | B | C |
|---|---|---|---|
| a) Mikrokristallinwachs EP 85 bis 86 °C | 44 | 35 | 24 |
| b) Paraffin EP 42 bis 44 °C | 34 | 30 | 30 |
| c) Vaseline EP 34 bis 38 °C | 10 | 20 | 40 |
| d) silanierte Kieselsäure | 12 | 15 | 15 |

Weitherhin wurden die folgenden, bei Raumtemperatur flüssigen Gemische der Kompositionen A und C, mit technischem 2-Octyldodekanol (Alkohol der Formel I mit $R^1 = R^2 = C_8H_{17}$) hergestellt.

Tabelle 2

| Mischungsbestandteil Gew.-% | D | E | F |
|---|---|---|---|
| Mittel A | 10 | - | - |
| Mittel C | - | 10 | 20 |
| 2-Octyldodekanol | 90 | 90 | 80 |

Zur Herstellung eines festen, körnigen Granulates (Mittel G) wurden in einem mit einer rotierenden Schnecke ausgerüsteten Mischer ein auf 90 °C erhitztes Gemisch aus 88 Gewichtsteilen wasserfreiem, körnigem Natriumtripolyphosphat (Na-TPP) und 12 Gewichststeilen des Schaumregulierungsmittels A miteinander verknetet und nach dem Abkühlen auf Raumtemperatur auf eine Korngröße von 0,2 bis 0,8 mm zerkleinert.

In einer zweiten Versuchsreihe wurden 12 Gewichtsteile des durch Erhitzen auf 80 °C aufgeschmolzenen Mittels A in einem schnellaufenden Mischer auf 88 Gewichtsprozent Na-TPP aufgesprüht. Das Na-TPP war zuvor auf 80 °C (Mittel H) erwärmt worden.

In einer dritten Versuchsreihe wurden, wie vorstehend in Versuchsreihe H beschrieben, 10 Gewichtsteile des bei Raumtemperatur flüssigen Mittels E auf 90 Gewichtsteile Na-TPP aufgesprüht, wobei ein ebenfalls gut schüttfähiges Granulat J erhalten wurde.

In einer weiteren Versuchsreihe wurden sprühgetrocknete Trägersalze eingesetzt. Für die Herstellung des Granulats K wurde von einem 43 Gew.-% Wasser enthaltenden Slurry ausgegangen, der ausschließlich die Trägersalze enthielt. Das sprühgetrocknete Salzgemisch wurde anschließend bei einer Temperatur von 80 °C in einem Mischer mit dem geschmolzenen Schaumdämpfungsmittel vermischt. Bei der

Herstellung des Granulats L wurde ein 42 Gew.-% Wasser enthaltender Slurry versprüht, der außer den Trägersalzen noch ein Gemisch von Celluloseethern (2 Teile Methylcellulose, 1 Teil Na-Carboxymethylcellulose) sowie das geschmolzene Schaumregulierungsmittel enthielt. Dieser Slurry wurde bis unmittelbar vor der Zerstäubung ständig intensiv durchmischt, um eine Phasentrennung zu vermeiden. Beide Slurries wurden in einem mit Düsen ausgerüsteten Sprühturm versprüht, wobei die im Gegenstrom geführte Trockenluft eine Eigangstemperatur von 200 °C und eine Ausgangstemperatur von 87 °C aufwies.

Tabelle 3

| Zusammensetzung (Gew.-%) | K | L |
|---|---|---|
| Na-Silikat ($Na_2O$ : $SiO_2$ = 1 : 3,5) | 10,4 | 10,5 |
| Na-TPP | 30,8 | 31,3 |
| Na-Sulfat | 40,4 | 41,2 |
| Wasser | 10,9 | 11,0 |
| Celluloseethergemisch | - | 1,0 |
| Mittel A | 7,5 | 5,0 |
| Schüttgewicht (g/l) | 620 | 600 |
| Korngröße (mm) | 0,2-0,8 | 0,2-0,8 |

Die anwendungstechnische Prüfung erfolgte in einer handelsüblichen Waschmaschine mit horizontal gelagerter Trommel, die mit 3 kg sauberen Baumwolltextilien beschickt wurde. Die Frontscheibe der Maschine war oberhalb des Flüssigkeitsniveaus in 4 gleiche Abschnitte unterteilt. Die im Folgenden angegebenen Schaumnoten bedeuten :

0 = kein Schaum
1 = Schaumhöhe 1/4
2 = Schaumhöhe 1/2
3 = Schaumhöhe 3/4
4 = Schaumhöhe 4/4
5 = Schaum im Einfüllstutzen sichtbar
6 = Überschäumen

Die Zusammensetzung der eingesetzten Waschmittel ist Tabelle 4 zu entnehmen. Als Na-Sulfoestersalz wurde das Natriumsalz des α-Sulfofettsäuremethylesters aus hydrierter Palmkernfettsäure eingesetzt. Die Abkürzung EO steht für Mol angelagertes Ethylenoxid. Die Salze bestehen aus Na-Perborat, Na-Silikat und Na-Sulfat.

Tabelle 4

| | Gew.-% | |
|---|---|---|
| | W1 | W2 |
| Na-Dodecylbenzolsulfonat | 9,0 | - |
| Na-Sulfoestersalz | - | 9,0 |
| ethoxylierter Talgalkohol 5 EO | 3,0 | 3,0 |
| ethoxylierter Talgalkohol 10 EO | 1,5 | 1,5 |
| Seife (Talg/Cocos) | 2,4 | 2,4 |
| Na-Carboxymethylcellulose | 1,0 | 1,0 |
| Na-TPP | 20,0 | 20,0 |
| Zeolith NaA | 17,0 | 17,0 |
| Salze, Wasser, Entschäumer | Rest | Rest |

Die Waschmittelkonzentration betrug 10 g/l. Das Schaumregulierungsmittel wurde jeweils dem pulverförmigen Waschmittel zugemischt. Es wurde enthärtetes Wasser vom Härtegrad 3 °dH (30 mg CaO/l) verwendet. Die Waschmaschine wurde in Betrieb genommen (sogen. Normalprogramm ohne Vorwäsche) und die Schaumhöhe in Abhängigkeit von der Temperatur abgelesen. Die Ergebnisse sind in Tabelle 5 zusammengestellt. Die Angabe « Gew.-% Entschäumer » bezieht sich auf die Menge an eingesetzter Wirksubstanz, d. h. Trägersalze blieben außer Betracht.

Tabelle 5

| Beispiel | Entschäumer Typ | Gew.-% | Waschmittel | Schaumnote bei 40° | 60° | 95° |
|---|---|---|---|---|---|---|
| - | - | - | W 1 | 6 | 6 | 6 |
| - | - | - | W 2 | 6 | 6 | 6 |
| 1 | A | 0,01 | W 1 | 4 | 3 | 2 |
| 2 | A | 0,05 | W 1 | 2 | 1 | 0,5 |
| 3 | A | 0,1 | W 1 | 1 | 0,5 | 0,5 |
| 4 | A | 0,01 | W 2 | 3 | 2 | 2 |
| 5 | A | 0,05 | W 2 | 2 | 0,5 | 0,5 |
| 6 | A | 0,1 | W 2 | 0,5 | 0 | 0 |
| 7 | B | 0,01 | W 1 | 3 | 2 | 2 |
| 8 | B | 0,05 | W 1 | 2 | 1 | 1 |
| 9 | B | 0,1 | W 1 | 2 | 0,5 | 0,5 |
| 10 | C | 0,01 | W 1 | 2 | 2 | 3 |
| 11 | C | 0,05 | W 1 | 1,5 | 0,5 | 1 |
| 12 | C | 0,1 | W 1 | 0,5 | 0 | 0 |
| 13 | C | 0,01 | W 2 | 3 | 2 | 2 |
| 14 | C | 0,05 | W 2 | 2 | 0,5 | 0 |
| 15 | C | 0,1 | W 2 | 0 | 0 | 0 |
| 16 | D | 0,05 | W 2 | 2 | 1 | 0 |
| 17 | E | 0,05 | W 2 | 2 | 1 | 0,5 |
| 18 | F | 0,05 | W 2 | 1,5 | 1 | 1,5 |
| 19 | G | 0,01 | W 1 | 3 | 3 | 2 |
| 20 | G | 0,05 | W 1 | 2 | 1 | 0,5 |
| 21 | G | 0,1 | W 1 | 1 | 0,5 | 0 |
| 22 | H | 0,01 | W 1 | 4 | 3 | 1,5 |
| 23 | H | 0,05 | W 1 | 2 | 0,5 | 0 |
| 24 | H | 0,1 | W 1 | 1 | 0,5 | 0 |
| 25 | H | 0,01 | W 2 | 3 | 2 | 1,5 |
| 26 | H | 0,05 | W 2 | 2 | 0,5 | 0,5 |
| 27 | H | 0,1 | W 2 | 0 | 0 | 0 |

Tabelle 5 (Fortsetzung)

| Beispiel | Entschäumer Typ | Gew.-% | Waschmittel | Schaumnote bei 40° | 60° | 95° |
|---|---|---|---|---|---|---|
| 28 | I | 0,01 | W 1 | 4 | 3 | 2 |
| 29 | I | 0,05 | W 1 | 2 | 1 | 0,5 |
| 30 | I | 0,1 | W 1 | 1 | 0 | 0 |
| 31 | K | 0,01 | W 1 | 4 | 3 | 2 |
| 32 | K | 0,05 | W 1 | 2 | 1 | 0,5 |
| 33 | K | 0,1 | W 1 | 1 | 0,5 | 0 |
| 34 | L | 0,01 | W 1 | 4 | 3 | 2 |
| 35 | L | 0,05 | W 1 | 3 | 1 | 0,5 |
| 36 | L | 0,1 | W 1 | 1 | 0,5 | 0 |
| 37 | L | 0,01 | W 2 | 3 | 2 | 2 |
| 38 | L | 0,05 | W 2 | 2 | 1 | 0,5 |
| 39 | L | 0,1 | W 2 | 1 | 0 | 0 |

Eine Reihe von Aufmischungen aus Waschpulver und Schaumregulierungsmittel wurden 3 Monate bei 30 °C gelagert und anschließend, wie vorstehend beschrieben, auf ihre Wirkung untersucht. Die Ergebnisse sind in Tabelle 6 zusammengestellt.

Tabelle 6

| Beispiel | Entschäumer Typ | Gew.-% | Waschmittel | Schaumnote bei 40 ° | 60 ° | 95 ° |
|---|---|---|---|---|---|---|
| 40 | A | 0,05 | W 1 | 5 | 4 | 4 |
| 41 | D | 0,05 | W 1 | 5 | 4 | 4 |
| 42 | G | 0,05 | W 1 | 2 | 1 | 0,5 |
| 43 | H | 0,05 | W 1 | 3 | 2 | 1 |
| 44 | I | 0,05 | W 1 | 4 | 3 | 2 |
| 45 | K | 0,05 | W 1 | 3 | 1,5 | 0,5 |
| 46 | L | 0,05 | W 1 | 2 | 1 | 0,5 |

Den Ergebnissen ist zu entnehmen, daß bei Anwesenheit eines Trägermaterials die Lagerbeständigkeit des Schaumregulierungsmittels bei der Lagerung zunimmt. Eine optimale Lagerbeständigkeit wird erzielt, wenn das aus Schaumregulierungsmittel und Trägersubstanz bestehende Gemisch Kompaktiert (Beispiel 42) oder gemeinsam versprüht wird (Beispiel 46). Auch bei Verwendung eines speziellen, besonders saugfähigen Trägersalzgemisches, auf das der Entschäumer aufgebracht wird, resultiert eine sehr gute Lagerbeständigkeit (Beispiel 45).

Vergleichsversuche

Die Entschäumergemische A und C wurden im Verhältnis 1 : 3 mit einem nichtionischen Tensid

(Talgalkohol + 5 EO) gemischt, die geschmolzenen Gemische in kalte Luft versprüht und dem Waschpulver zugefügt (Mischungen VA und VC). Die Versuchsreihe H wurde wiederholt mit der Maßgabe, daß die Temperatur des Basispulvers 25 °C betrug (Mischung VH). Weiterhin wurden in der Mischung C die Komponenten (b) und (c) durch die gleiche Menge eines flüssigen Paraffinöls ersetzt. Dieses Gemisch wurde, wie in I beschrieben, auf die 9-fache Gewichtsmenge Na-TPP aufgesprüht (Mittel VI). Nach Zumischen der genannten Zubereitungen wurden die in Tabelle 7 wiedergegebenen Ergebnisse erzielt.

Tabelle 7

| Versuch | Entschäumer Gew.-% | Waschmittel | Schaumnote 40 ° | 60 ° | 95 ° |
|---|---|---|---|---|---|
| VA | 0,05 | W1 | 6 | 6 | 6 |
| | 0,1 | | 6 | 6 | 6 |
| VC | 0,05 | W1 | 6 | 6 | 6 |
| | 0,1 | | 5 | 6 | 6 |
| VH | 0,05 | W1 | 4 | 4 | 3 |
| | 0,1 | | 3 | 3 | 2 |
| VI | 0,05 | W1 | 4 | 5 | 4 |
| | 0,1 | | 3 | 3 | 2 |

Das Einbringen des Schaumregulierungsmittels in ein nichtionisches Tensid führt in dem angegebenen Konzentrationsbereich zu einem Überschäumen des anionischen Waschmittels (Versuche VA und VC). Wird der geschmolzene Entschäumer auf ein kaltes Trägermaterial aufgebracht, werden inhomogene Gemische mit verschlechterter Wirkung erhalten (Versuch VH). Ein Ersatz der festen Paraffinkomponenten (b) und (c) durch flüssige Paraffine führt ebenfalls zu einem Wirkungsverlust (Versuch VI).

**Patentansprüche**

1. Zur Verwendung in tensidhaltigen Mitteln geeignetes Schaumregulierungsmittel, bestehend aus einem Gemisch von Paraffinkohlenwasserstoffen und hydrophobierter Kieselsäure, das gegebenenfalls an einem wasserlöslichen Trägermaterial adsorbiert ist, gekennzeichnet durch die folgende Zusammensetzung :
   a) 5 bis 60 Gew.-% mikrokristallines Paraffinwachs mit einem Erstarrungspunkt von 60° bis 95 °C,
   b) 15 bis 60 Gew.-% Hartparaffin mit einem Erstarrungspunkt von 40° bis 60 °C,
   c) 1 bis 50 Gew.-% Weichparaffin mit einem Erstarrungspunkt von 32° bis 42 °C,
   d) 3 bis 18 Gew.-% hydrophobierte, feinteilige Kieselsäure,

wobei das Schaumregulierungsmitel frei von Tensiden ist.

2. Mittel nach Anspruch 1, dadurch gekennzeichnet, daß die Komponente (a) einen Erstarrungspunkt von 62° bis 90 °C aufweist und daß ihr Anteil 20 bis 55 Gew.-% beträgt.

3. Mittel nach Anspruch 1, dadurch gekennzeichnet, daß die Komponente (b) einen Erstarrungspunkt von 42° bis 56 °C aufweist und daß ihr Anteil 20 bis 50 Gew.-% beträgt.

4. Mittel nach Anspruch 1 bis 3, dadurch gekennzeichnet, daß der Gesamtanteil der Komponenten (a) und (b) mindestens 50, vorzugsweise 65 bis 85 Gew.-% beträgt.

5. Mittel nach Anspruch 1, dadurch gekennzeichnet, daß die Komponente (c) einen Erstarrungspunkt von 35° bis 40 °C aufweist und daß ihr Anteil 5 bis 25 Gew.-% beträgt.

6. Mittel nach Anspruch 1, dadurch gekennzeichnet, daß der Anteil der Komponente (d) 5 bis 15 Gew.-% beträgt.

7. Mittel nach Anspruch 1, dadurch gekennzeichnet, daß es im Gemisch mit Alkoholen der Formel I vorliegt :

$$R^1 - CH_2 - CH_2 - \underset{\displaystyle R^2}{\underset{|}{CH}} - CH_2 - OH \qquad (I)$$

in der die Gruppen R1 und R2 gleich oder verschieden sein können und Alkylreste mit 4 bis 16 Kohlenstoffatomen bedeuten und die Gesamtzahl der in dem Alkohol enthaltenen Kohlenstoffatome 16 bis 30 beträgt.

8. Mittel nach Anspruch 7, dadurch gekennzeichnet, daß es aus einem Gemisch von 2 bis 20 Gewichtsteilen einer Mischung aus

20 bis 45 Gew.-% Komponente (a)
15 bis 40 Gew.-% Komponente (b)
20 bis 50 Gew.-% Komponente (c)
5 bis 15 Gew.-% Komponente (d)

und 98 bis 80 Gewichtsteilen an Alkoholen der Formel I besteht.

9. Mittel nach Anspruch 1 bis 8, dadurch gekennzeichnet, daß es an einer wasserlöslichen, granularen Trägersubstanz adsorbiert ist, wobei die Partikel eine Korngröße von 0,1 bis 1,6 mm aufweisen.

10. Mittel nach Anspruch 9, dadurch gekennzeichnet, daß der Anteil des Schaumregulierungsmittels, bezogen auf das fertige Granulat, 2 bis 20 Gew.-% beträgt.

11. Verfahren zur Herstellung der Mittel nach Anspruch 9 und 10, dadurch gekennzeichnet, daß man die geschmolzenen Gemische mit einer erwärmten Trägersubstanz vermischt.

12. Verfahren nach Anspruch 11, dadurch gekennzeichnet, daß die Temperatur der Trägersubstanz in der Größenordnung des Erstarrungspunktes des geschmolzenen Gemisches plus/minus 20 °C liegt.

13. Verfahren zur Herstellung der Mittel nach Anspruch 9 und 10, dadurch gekennzeichnet, daß man eine wäßrige Dispersion bzw. Lösung des Schaumregulierungsmittels und der Trägersubstanz sprühtrocknet.

14. Verfahren nach Anspruch 13, dadurch gekennzeichnet, daß man der Dispersion wasserlösliche Polymere in Mengen von 0,3 bis 3 Gewichtsprozent, bezogen auf wasserfreie Bestandteile, zusetzt.

**Claims**

1. A foam regulator suitable for use in surfactant-containing compositions, consisting of a mixture of paraffin hydrocarbons and hydrophobicized silica and, optionally, a water-soluble carrier, characterized by the following composition :

a) from 5 to 60 % by weight of microcrystalline paraffin wax having a solidification point of from 60 to 95 °C,

b) from 15 to 60 % by weight of hard paraffin having a solidification point of from 40 to 60 °C,

c) from 1 to 50 % by weight of soft paraffin having a solidification point of from 32 to 42 °C,

d) from 3 to 18 % by weight of hydrophobicized, finely divided silica,

the foam regulator being free from surfactants.

2. A foam regulator as claimed in Claim 1, characterized in that component (a) has a solidification point of from 62 to 90 °C and makes up from 20 to 55 % by weight of the regulator.

3. A foam regulator as claimed in Claim 1, characterized in that component (b) has a solidification point of from 42 °C to 56 °C and makes up from 20 to 50 % by weight of the regulator.

4. A foam regulator as claimed in Claims 1 to 3, characterized in that components (a) and (b) make up at least 50 % by weight and preferably from 65 to 85 % by weight of the regulator.

5. A foam regulator as claimed in Claim 1, characterized in that component (c) has a solidification point of from 35 to 40 °C and makes up from 5 to 25 % by weight of the regulator.

6. A foam regulator as claimed in Claim 1, characterized in that component (d) makes up from 5 to 15 % by weight of the regulator.

7. A foam regulator as claimed in Claim 1, characterized in that it is present in admixture with alcohols corresponding to the following formula :

$$R^1 - CH_2 - CH_2 - \underset{\substack{|\\ R^2}}{CH} - CH_2 - OH \qquad (I)$$

in which $R^1$ and $R^2$ may be the same or different and represent alkyl radicals containing from 4 to 16 carbon atoms, the total number of carbon atoms in the alcohol amounting to between 16 and 30.

8. A foam regulator as claimed in Claim 7, characterized in that it consists of a mixture of from 2 to 20 parts by weight of a mixture of

from 20 to 45 % by weight of component (a),
from 15 to 40 % by weight of component (b),
from 20 to 50 % by weight of component (c),
from 5 to 15 % by weight of component (d)

and from 98 to 80 parts by weight of alcohols corresponding to formula I.

9. A foam regulator as claimed in Claims 1 to 8, characterized in that it is absorbed on a water-soluble granular carrier of which the particles have a grain size of from 0.1 to 1.6 mm.

10. A foam regulator as claimed in Claim 9, characterized in that the foam regulator makes up from 2 to 20 % by weight of the final granulate.

11. A process for producing the foam regulator claimed in Claims 9 and 10, characterized in that the molten mixtures are mixed with a heated carrier.

12. A process as claimed in Claim 11, characterized in that the temperature of the carrier is of the order of the solidification point of the molten mixture plus/minus 20 °C.

13. A process for producing the foam regulator claimed in Claims 9 and 10, characterized in that an aqueous dispersion or solution of the foam regulator and carrier in spray-dried.

14. A process as claimed in Claim 13, characterized in that water-soluble polymers are added to the dispersion in quantities of from 0.3 to 3 % by weight, based on anhydrous constituents.

**Revendications**

1. Agents régulateurs de mousse convenant pour l'emploi dans des agents contenant des tensioactifs, consistant en un mélange d'hydrocarbures paraffiniques et d'acide silicique hydrofugé, de même qu'éventuellement en un matériau de support soluble dans l'eau, caractérisés par la composition suivante :

a) 5 à 60 % en poids de cire de paraffine microcristalline ayant un point de solidification de 60° à 95 °C,

b) 15 à 60 % en poids de paraffine dure ayant un point de solidification de 40 °C à 60 °C,

c) 1 à 50 % en poids d'une paraffine molle ayant un point de solidification de 32° à 42 °C,

d) 3 à 18 % en poids d'acide silicique hydrofugé finement divisé,

l'agent régulateur de mousse étant exempt de tensioactifs.

2. Agent selon la revendication 1, caractérisé en ce que le composant (a) présente un point de solidification de 62 °C à 90 °C et en ce que sa proportion s'élève de 20 à 55 % en poids.

3. Agent selon la revendication 1, caractérisé en ce que le composant (b) présente un point de solidification de 42 °C à 56 °C et en ce que sa proportion est de 20 à 50 % en poids.

4. Agent selon les revendications 1 à 3, caractérisé en ce que la proportion d'ensemble des composants (a) et (b) est d'au moins 50, de préférence de 65 à 85 % en poids.

5. Agent selon la revendication 1, caractérisé en ce que le composant (c) présente un point de solidification de 35 °C à 40 °C et en ce que sa proportion est de 5 à 25 % en poids.

6. Agent selon la revendication 1, caractérisé en ce que la proportion du composant (d) est de 5 à 15 % en poids.

7. Agent selon la revendication 1, caractérisé en ce qu'il se présente en mélange avec des alcools de formule I :

$$R^1 - CH_2 - CH_2 - \underset{\displaystyle R^2}{\underset{|}{CH}} - CH_2 - OH \qquad (I)$$

dans laquelle les groupes $R^1$ et $R^2$ peuvent être identiques ou différents et signifient des radicaux alcoyle ayant 4 à 16 atomes de carbone et en ce que le nombre total des atomes de carbone contenus dans l'alcool est de 16 à 30.

8. Agent selon la revendication 7, caractérisé en ce qu'il consiste en un mélange de 2 à 20 parties en poids d'un mélange de

20 à 45 % en poids de composant (a)
15 à 40 % en poids de composant (b)
20 à 50 % en poids de composant (c)
5 à 15 % en poids de composant (d)

et de 98 à 80 parties en poids d'alcools de formule I.

9. Agent selon les revendications 1 à 8, caractérisé en ce qu'il est adsorbé sur une substance de support granulaire soluble dans l'eau, les particules présentant une granulométrie de 0,1 à 1,6 mm.

10. Agent selon la revendication 9, caractérisé en ce que la proportion de l'agent régulateur de mousse, par rapport au granulat terminé, est de 2 à 20 % en poids.

11. Procédé de fabrication des agents selon les revendications 9 et 10, caractérisé en ce qu'on mélange les mélanges fondus avec une substance de support chauffée.

12. Procédé selon la revendication 11, caractérisé en ce que la température de la substance de support est de l'ordre de grandeur du point de solidification du mélange fondu, plus ou moins 20 °C.

13. Procédé de fabrication des agents selon les revendications 9 et 10, caractérisé en ce qu'on sèche par pulvérisation une dispersion ou solution aqueuse de l'agent régulateur de mousse et de la substance de support.

14. Procédé selon la revendication 13, caractérisé en ce qu'on ajoute à la dispersion des polymères solubles dans l'eau en des quantités de 0,3 à 3 % en poids par rapport aux constituants anhydres.